# EUROPEAN PATENT APPLICATION

(11) **EP 4 773 224 A1**
(43) Date of publication of application: **08.07.2026**
(21) Application number: 24861472.9
(22) Date of filing: 27.03.2024
(51) Int. Cl.: H01M 4/36, H01M 4/134, H01M 4/38

(54) **SILICON-BASED COMPOSITE MATERIAL AND PREPARATION METHOD THEREFOR, AND NEGATIVE ELECTRODE**

(30) Priority: 06.09.2023 CN 202311148345
(71) Applicant: Lanxi Zhide Advanced Materials Co., Ltd., Jinhua, Zhejiang 321100 (CN)
(72) Inventor: CHEN, Qinghua, Jinhua, Zhejiang 321100 (CN); FANG, Bing, Jinhua, Zhejiang 321100 (CN); LIU, Ruifang, Jinhua, Zhejiang 321100 (CN)
(74) Representative: Novagraaf Technologies
(86) International application number: PCT/CN2024/084211
(87) International publication number: WO 2025/050621

(57) **Abstract**

Provided are a silicon-based composite material and a preparation method therefor, and a anode. The silicon-based composite material includes a porous matrix, silicon nanoparticles, and heteroatoms, wherein the porous matrix is provided with three-dimensional intersecting pore channels having multi-level pore sizes; each pore channel contains at least one silicon nanoparticle; and the heteroatoms at least partially cover the surface of the silicon nanoparticles, and/or the heteroatoms are spaced between the silicon nanoparticles. The heteroatoms separate and constrain the silicon nanoparticles, such that the silicon nanoparticles are uniformly dispersed in the three-dimensional intersecting pore channels of the porous matrix, thereby effectively alleviating the volume effect of silicon during charge-discharge cycles, avoiding structural collapse of the composite material, and improving the cycling stability of the electrode.

## Description

### Cross-Reference to Related Application

This invention claims priority to Chinese Patent Application No. 202311148345.7, filed to the China National Intellectual Property Administration on September 6, 2023 and entitled "Silicon-Based Composite Material and Preparation Method Therefor, and Anode", the invention of which is hereby incorporated by reference in its entirety.

### Technical Field

The present invention relates to the technical field of battery materials, and in particular, to a silicon-based composite material and a preparation method therefor, and a anode.

### Background

Silicon is an alloy-type lithiation material with a theoretical lithiation capacity of up to 4200 mAh/g. Due to abundant resources, safety, and non-toxicity, silicon is considered the most promising anode material for lithium-ion batteries to replace conventional carbon-based anode materials for industrial-scale applications. As the anode material for the lithium-ion batteries, silicon has two problems. First, silicon exhibits poor electrical conductivity, which may be solved by various modes such as carbon carriers, carbon doping, carbon coating, and the like. Second, silicon may undergo huge volume expansion/contraction during lithiation/delithiation, leading to destruction of an electrode structure, battery capacity fading, and reduced cycle efficiency.

In recent years, through optimization of the size and distribution of silicon particles and modification of the structure of the anode material, the volume expansion of silicon-based composite materials, such as silicon oxide and silicon-carbon anode materials, has been significantly reduced. However, such improvement is not enough for practical applications.

Therefore, how to further reduce the volume expansion of the silicon-based composite materials during charge-discharge cycles and improve the cycle life is a critical issue that needs to be solved urgently.

### Summary

A main objective of the present invention is to provide a silicon-based composite material and a preparation method therefor, and a anode, so as to solve the problem in the related art of significant volume expansion of silicon used as a anode material for lithium-ion batteries during charge-discharge cycles, which leads to a shortened cycle life.

In order to achieve the above objective, according to a first aspect of the present invention, a silicon-based composite material is provided. The silicon-based composite material includes silicon-based composite material particles. The silicon-based composite material particles include a porous matrix, silicon nanoparticles, and heteroatoms. The porous matrix is provided with three-dimensional intersecting pore channels having multi-level pore sizes. Each pore channel contains at least one silicon nanoparticle. The heteroatoms at least partially cover the surface of the silicon nanoparticles, and/or the heteroatoms are spaced between the silicon nanoparticles.

Further, the silicon-based composite material further includes closed pores. A closed pore volume of the silicon-based composite material is 0.01-0.25 cm³/g; and/or a true density of the silicon-based composite material is 1.3-3.0 g/cm³.

Further, a specific surface area of the silicon-based composite material is 0.5-50 m²/g, preferably 0.5-10 m²/g, and more preferably 0.5-2 m²/g; and/or a compacted specific surface area of the silicon-based composite material (i.e., the specific surface area of the silicon-based composite material after compaction under a pressure of 4000 kgf/cm²) is 1-20 times that of the specific surface area of the silicon-based composite material, preferably 1-10 times, and more preferably 1-5 times.

Further, the silicon nanoparticles include first silicon nanoparticles, second silicon nanoparticles, and third silicon nanoparticles. A size of the first silicon nanoparticles is D1, where 0.35 nm≤D1<2 nm. A size of the second silicon nanoparticles is D2, where 2 nm≤D2<5 nm. A size of the third silicon nanoparticles is D3, where 5 nm≤D3≤10 nm. Still further, based on the mass of the silicon nanoparticles, a mass content of the first silicon nanoparticles is 60-100%, a mass content of the second silicon nanoparticles is 0-40%, and a mass content of the third silicon nanoparticles is 0-5%.

Further, the pore channels of the porous matrix include first pore channels, second pore channels, and third pore channels. A pore size of the first pore channels is d1, where 0.35 nm≤d1≤2 nm. A pore size of the second pore channels is d2, where 2 nm<d2≤10 nm. A pore size of the third pore channels is d3, where 10 nm<d3≤50 nm. Still further, a volume proportion of the first pore channels in the pore channels of the porous matrix is 30-95%, a volume proportion of the second pore channels in the pore channels of the porous matrix is 1-60%, and a volume proportion of the third pore channels in the pore channels of the porous matrix is 0-15%.

Further, the porous matrix includes at least one of porous carbon, a porous metal framework, a porous metal oxide framework, a porous Metal-Organic Framework (MOF), and a porous organic-inorganic hybrid material framework. A specific surface area of the porous matrix is 200-3000 m²/g, and a pore volume is 0.2-3.0 cm³/g.

Further, in the silicon-based composite material, a mass content of silicon is 5-90%, and a mass content of the heteroatoms is 0.1-10%.

Further, the heteroatoms cover the surface of the silicon nanoparticles and/or are spaced between multiple silicon nanoparticles to form heteroatom layers. A total thickness of the heteroatom layers is 0.5-50 nm, preferably 0.5-10 nm, and more preferably 0.5-2 nm.

Further, the heteroatoms include at least one of B, C, N, P, O, and S.

Further, a median particle size d_{V,50} of the silicon-based composite material is 5-20 µm, and a span (d_{V,90}-d_{V,10})/d_{V,50} is 0.8-2.0. Preferably, the median particle size d_{V,50} of the silicon-based composite material is 6-12 µm, and the span (d_{V,90}-d_{V,10})/d_{V,50} is 0.8-1.2.

Further, the silicon-based composite material further includes a coating layer. Preferably, a material of the coating layer is selected from one or more of a solid electrolyte, a conductive polymer, a carbonaceous material, a metal, an alloy, a metal oxide, a metal hydroxide, a metal halide, a metal sulfide, a metal phosphate, a borate-containing compound, a sulfate-containing compound, a nitrate-containing compound, and a polyoxometalate. More preferably, the coating layer includes a carbonaceous material.

In order to achieve the above objective, according to a second aspect of the present invention, a method for preparing a silicon-based composite material is further provided. The preparation method includes: S1, providing a porous matrix, the porous matrix being provided with three-dimensional intersecting pore channels having multi-level pore sizes; and S2, contacting a silicon-containing precursor and a heteroatom-containing precursor with the porous matrix to obtain the silicon-based composite material. The porous matrix, the pore channels, the silicon nanoparticles, and the heteroatoms respectively have the same meanings as the corresponding concepts in the above first aspect.

Further, in S2, the silicon-containing precursor includes at least one of monosilane, disilane, trisilane, halosilane, polysilane, thiazole and a derivative thereof, and silafluorene and a derivative thereof. The heteroatom-containing precursor includes at least one of an oxygen-containing precursor, a carbon-containing precursor, a nitrogen-containing precursor, a phosphorus-containing precursor, a sulfur-containing precursor, and a boron-containing precursor.

Further, in S2, the silicon-containing precursor and the heteroatom-containing precursor are in contact with the porous matrix at a temperature of 150-1000 °C for 0.1-100 h. Still further, the silicon-containing precursor and the heteroatom-containing precursor are in contact with the porous matrix at a temperature of 200-700 °C.

Further, in S2, the manner in which the silicon-containing precursor and the heteroatom-containing precursor are in contact with the porous matrix includes: alternately contacting the silicon-containing precursor and the heteroatom-containing precursor with the porous matrix; or simultaneously contacting the silicon-containing precursor and the heteroatom-containing precursor with the porous matrix; or alternately contacting the silicon-containing precursor and a mixed gas containing the silicon-containing precursor and the heteroatom-containing precursor with the porous matrix. Preferably, the silicon-containing precursor is continuously in contact with the porous matrix, and the heteroatom-containing precursor is intermittently introduced during this process.

Further, the method for preparing the silicon-based composite material further includes S3 performed after S2: performing a coating treatment to obtain a coating layer. The coating layer has the same meaning as that in the above first aspect.

According to a third aspect of the present invention, a anode is provided. The anode includes a anode active substance. The anode active substance includes the silicon-based composite material provided in the above first aspect or the silicon-based composite material obtained by the preparation method provided in the above second aspect.

According to a fourth aspect of the present invention, a battery is provided. The battery a cathode, a anode, a separator, and an electrolyte. The anode includes a anode active substance, the anode active substance including the silicon-based anode material provided in the above first aspect or the silicon-based composite material obtained by the preparation method provided in the above second aspect.

By applying the technical solutions of the present invention, the silicon-based composite material provided in the present invention uses the porous matrix as a matrix material to support the silicon nanoparticles, and introduces the heteroatoms to further limit the size of the silicon nanoparticles, separate and constrain the silicon nanoparticles, and control the size and distribution of the silicon material in the pore channels, such that the silicon material is uniformly dispersed in the three-dimensional intersecting pore channels of the porous matrix, thereby effectively alleviating the volume effect of silicon during charge-discharge cycles, avoiding structural collapse of the composite material caused by expansion of silicon during lithiation, and improving the cycling stability of the electrode.

At the same time, strong Si-X bonds (X being a heteroatom) between the heteroatoms and the silicon nanoparticles can constrain the expansion of silicon during lithiation or transfer the silicon lithiation-induced stress to the surrounding space (such as the porous matrix). For example, a small number of closed pores adjacent to the silicon nanoparticles serve as buffer spaces, thereby further improving the cycling stability of the anode material. In addition, the silicon-based composite material has a dense structure and excellent mechanical strength.

### Brief Description of the Drawings

The drawings of the specification, which constitute a part of the present invention, are intended to provide a further understanding of the present invention, and the exemplary embodiments of the present invention and the description thereof are intended to explain the present invention and do not constitute an undue limitation on the present invention. In the drawings:
Fig. 1 shows a schematic cross-sectional structural diagram of a silicon-based composite material provided by the present invention.
Fig. 2 shows a schematic structural diagram of a porous matrix in a silicon-based composite material provided by the present invention.
Fig. 3 shows a pore size distribution diagram of a porous matrix in Embodiment 1.
Fig. 4 shows an X-Ray Diffraction (XRD) diagram of a silicon-based composite material obtained in Embodiment 1.
Fig. 5 shows a dQ/dV curve obtained from a delithiation curve of a first cycle in a galvanostatic charge-discharge curve of a lithium-ion battery using a silicon-based composite material obtained according to Embodiment 1.
Fig. 6 shows a dQ/dV curve obtained from a delithiation curve of a first cycle in a galvanostatic charge-discharge curve of a lithium-ion battery using a silicon-based composite material obtained according to Comparative example 1.

### Detailed Description of the Embodiments

It is to be noted that the embodiments in the present invention and the features in the embodiments may be combined with each other without conflict. The present invention will be described below in detail with reference to the embodiments.

As analyzed in the Background of the present invention, silicon used as a anode material for lithium-ion batteries in the related art undergoes significant volume expansion during charge-discharge cycles. In order to solve this problem, CN108475779B discloses a novel material with extremely durable lithiation and a manufacturing method therefor, including a composite of a porous carbon support and silicon. The porous support material may be a carbon material containing micropores, mesopores, and/or macropores, pore channels of which are subsequently filled with silicon. Silicon is deposited in pore channel structures of the porous support material to form a composite. The composite exhibits remarkably durable lithiation capability. After being fabricated into a battery cell, the composite possesses excellent cycle life.

In the present invention, silicon is deposited into the pore channels of the porous carbon material by chemical vapor deposition, thereby forming uniformly dispersed nano-silicon particles, which can reduce the expansion of the silicon anode material itself to a certain extent. The improvement in electrochemical performance is highly correlated with the size and distribution of the deposited silicon particles and the physicochemical properties of the support material. Compared to graphite anodes, the silicon material deposited by this technology still undergoes significant expansion during the cycles. At the same time, due to the wider pore size distribution of the porous carbon support used in this technology, larger-sized pore channels are difficult to seal during the silicon deposition process, which increases the probability of contact between the deposited silicon in the composite material and an electrolyte, leading to more side reactions during the cycles and generates more Solid Electrolyte Interphase (SEI), which also has a certain impact on the cycle life. Therefore, it is still necessary to continuously optimize the structure of the composite material to further reduce expansion and improve cycle life.

In order to further optimize the structure of the silicon-based composite material, reduce volume expansion, and improve cycle life, the present invention provides a silicon-based composite material.

### A. Silicon-based composite material

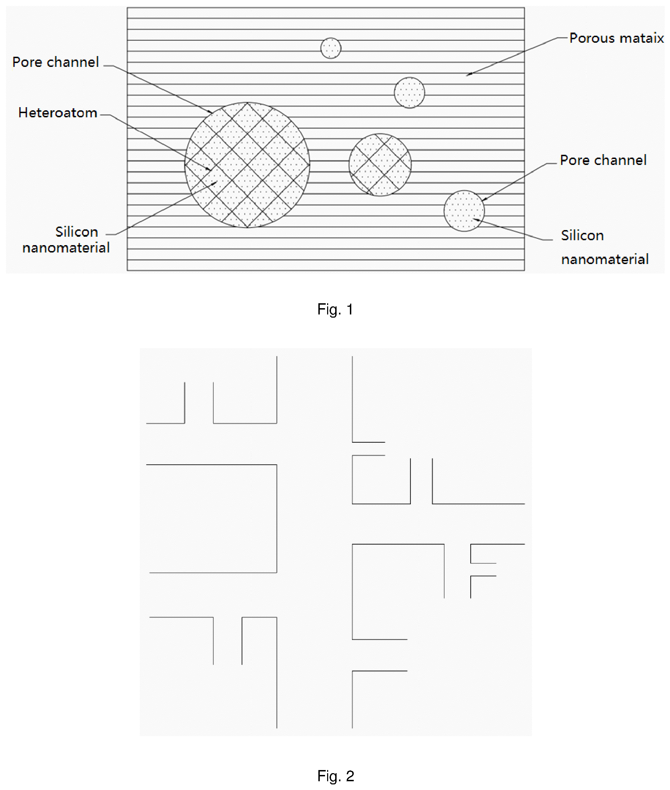

In one typical implementation of the present invention, a silicon-based composite material is provided. The silicon-based composite material includes silicon-based composite material particles. As shown in Fig. 1, the silicon-based composite material particles include a porous matrix, silicon nanoparticles, and heteroatoms. Each pore channel of the porous matrix contains at least one silicon nanoparticle. The heteroatoms at least partially cover the surface of the silicon nanoparticles, and/or the heteroatoms are spaced between the silicon nanoparticles. As shown in Fig. 2, the porous matrix is provided with three-dimensional intersecting pore channels having multi-level pore sizes.

In the present invention, "each pore channel contains at least one silicon nanoparticle" means that some pore channels with smaller diameters contain only one silicon nanoparticle, while some pore channels with larger diameters contain multiple silicon nanoparticles.

By applying the technical solutions of the present invention, the silicon-based composite material provided in the present invention uses the porous matrix as a matrix material to support the silicon nanoparticles and the heteroatoms doped into the silicon nanoparticles. By doping the heteroatoms into the silicon nanoparticles to separate and constrain the silicon nanoparticles, the size and distribution of the silicon material in the pore channels are controlled, such that the silicon material is uniformly dispersed in the three-dimensional intersecting pore channels of the porous matrix, thereby effectively alleviating the volume effect of silicon during charge-discharge cycles, avoiding structural collapse of the composite material caused by the expansion of silicon during lithiation, and improving the cycling stability of the electrode.

At the same time, strong Si-X bonds (X being a heteroatom) between the heteroatoms and the silicon nanoparticles can constrain the expansion of silicon during lithiation or transfer the silicon lithiation-induced stress to the surrounding medium, such as the porous matrix, thereby improving the cycling stability of the anode material. In addition, the strong Si-X bonds may also improve the mechanical strength of the silicon-based composite material, thereby further enhancing the structural stability of the material.

In order to further alleviate the expansion of the silicon nanoparticles during lithiation and improve the cycling stability of the above silicon-based composite material, the silicon-based composite material preferably further includes closed pores. In some embodiments, the closed pores are present inside the porous matrix. In some embodiments, pores in the porous matrix that may accommodate the entry of silicon-containing precursor molecules are filled with the silicon nanoparticles or an assembly of silicon nanoparticles and heteroatoms after deposition, sometimes forming new closed pores. Such closed pores are typically located near the silicon nanoparticles. Particularly, a small number of closed pores adjacent to the silicon nanoparticles may serve as buffer spaces for the expansion of silicon during lithiation, preventing the silicon particles from expanding and cracking, thereby improving the cycling stability of the material. However, the amount of closed pores in the composite material should not be excessive. Excessive closed pores in the material may reduce the material strength. During electrode plate compaction, the material is prone to crushing, resulting in numerous open pores, an increased specific surface area, and a decreased initial coulombic efficiency. The remaining pores further weaken the material strength at later stages, creating stress weak points during the cycles and thereby reducing the cycling stability of the material.

Due to the presence of closed pores, a framework density of the silicon-based composite material is less than a theoretical density of non-porous pure silicon and pure matrix materials (such as graphite). Based on information available to those skilled in the art, a theoretical density of a pure silicon material is 2.33 g/cm³, a theoretical density of a graphite material is 2.09-2.33 g/cm³, and a theoretical density of aluminum oxide can reach 3.50 g/cm³. A volume of closed pores enclosed in the material may be calculated from the framework density and the theoretical density. The framework density of the material is usually obtained by a helium pycnometry method. Herein, the framework density of the material obtained by the helium pycnometry method is referred to as a true density of the material. A closed pore volume is calculated by subtracting a volume of a fully dense material composed of the same elements from a framework volume of the composite material. The framework volume of the composite material is a reciprocal of the true density of the composite material. The framework volume consists of two parts: the volume of the fully dense material composed of the same elements, and the closed pore volume. The volume of the fully dense material is a reciprocal of the true density (i.e., the theoretical density of the fully dense material composed of the same elements). In some embodiments, the closed pore volume of the silicon-based composite material is 0.01-0.25 cm³/g. In some embodiments, the true density of the silicon-based composite material obtained by the helium pycnometry method is 1.3-3.0 g/cm³.

The silicon-based composite material includes silicon-based composite material particles. The silicon-based composite material particles need to have an appropriate particle size distribution to meet application requirements, and the particle size distribution should also be as uniform as possible. In some embodiments, a median particle size d_{V,50} of the silicon-based composite material is 5-20 µm, and a span (d_{V,90}-d_{V,10})/d_{V,50} is 0.8-2.0. Preferably, the median particle size d_{V,50} of the silicon-based composite material is 6-12 µm, and the span (d_{V,90}-d_{V,10})/d_{V,50} is 0.8-1.2.

### [Porous matrix]

The type of the above porous matrix is not particularly limited. Any conventional porous material suitable for use in a anode material may be employed, including but not limited to any one or a composite framework formed by two or more of porous carbon, a porous metal framework (e.g., copper foam), a porous oxide framework (e.g., porous titanium oxide or porous aluminum oxide), a porous MOF (e.g., an MOF or a Zeolitic Imidazolate Framework (ZIF)), and a porous organic-inorganic hybrid material (e.g., a porous Polyvinyl Alcohol (PVA)/SiO₂ hybrid material) framework.

The porous matrix should have a large specific surface area and abundant pore structures to provide sites and spaces for the deposition of the silicon nanoparticles. The specific surface area and pore distribution of the porous matrix directly affect the silicon deposition effect, and consequently affect the specific surface area of the composite material and the size of the silicon nanoparticles in the composite material.

In some embodiments, a specific surface area of the porous matrix is 200-3000 m²/g, and a pore volume is 0.2-3.0 cm³/g. For example, the specific surface area of the porous matrix may be 200 m²/g, 500 m²/g, 800 m²/g, 1000 m²/g, 1500 m²/g, 2000 m²/g, 2500 m²/g, 3000 m²/g, or any range between any two of these values. The pore volume may be 0.2 cm³/g, 0.5 cm³/g, 0.8 cm³/g, 1.0 cm³/g, 1.5 cm³/g, 2.0 cm³/g, 2.5 cm³/g, 3.0 cm³/g, or any range between any two of these values. In some preferred embodiments, the specific surface area of the porous matrix is 1000-2000 m²/g, and the pore volume is 0.5-1.0 cm³/g.

In some embodiments, the above porous matrix is porous carbon, which may be prepared from a carbon precursor through a pyrolysis and/or activation process. The carbon precursor includes one or more of a polymer precursor, a biomass precursor, and a fossil carbon source. For example, the carbon precursor may, but is not limited to, be one or more of glucose, sucrose, maltose, lactose, cyclodextrin, starch, glycogen, cellulose, hemicellulose, lignin, epoxy resin, thermoplastic phenolic resin, thermosetting phenolic resin, polyacetal resin, urea-formaldehyde resin, furfural resin, furfuryl ketone resin, acrylic resin, a coconut shell, a rice husk, and wood. In some embodiments, a pyrolysis temperature is 500-1800 °C, and a pyrolysis time is 0.5-10 h. The pyrolysis temperature and the pyrolysis time may be varied. For example, the pyrolysis temperature may be 650-950 °C, 900-1100 °C, 1050-1250 °C, 1200-1400 °C, 1350-1550 °C, 1500-1750 °C, or the like. The pyrolysis time may be 1-2 h, 1.5-3 h, 2-5 h, 4-8 h, 5-10 h, or the like. Activation of the pyrolyzed carbon material is a commonly used method for further adjusting the pore structure of the porous carbon. Activation is typically achieved by contacting the pyrolyzed carbon material with oxygen-containing substances, including but not limited to KOH, NaOH, K₂CO₃, Na₂CO₃, H₃PO₄, H₂O, CO₂, O₂, and the like. The contact manner may be liquid-solid contact or gas-solid contact. A contact temperature is 400-1200 °C.

In some typical implementations, the porous carbon material is prepared according to the following steps: the carbon precursor is heated to 800 °C at a rate of 2 °C/min in an N₂ atmosphere and maintained for 2 h, then heated to 900 °C in a mixed gas of CO₂ and N₂ and maintained for 2 h, thereby obtaining the porous carbon material. The specific surface area and pore volume of the porous carbon may be adjusted by the heating rate, holding temperature, and holding time. In addition, the heteroatoms may also be introduced into the carbon precursor to prepare a porous carbon material containing the heteroatoms.

In some embodiments, the above porous metal framework, porous oxide framework, porous MOF, and porous organic-inorganic hybrid material may be selected from commercially available products or prepared by methods known in the art, such as hydrothermal methods, solvothermal methods, electrochemical deposition methods, powder metallurgy methods, molten metal methods, and ion exchange methods. The pore size and proportion of the porous framework may be adjusted by controlling process parameters.

### [Pore channel structure of porous matrix]

The pore channels of the porous matrix serve as sites for the deposition of the silicon nanoparticles, where the size determines the maximum size of the silicon nanoparticles and the assembly of silicon nanoparticles and heteroatoms, and the distribution determines the distribution of the silicon nanoparticles in the silicon-based composite material. On the other hand, the porous matrix, serving as the matrix material of the silicon-based composite material, has the pore channel structures that significantly affect the structural stability of the composite material. As shown in Fig. 1, the present invention specifically designs a network structure provided with interconnected pore channels having multi-level pore sizes for the porous matrix and imposes certain restrictions on the pore size distribution thereof. The design principle of this multi-level pore size characteristic of the matrix material, i.e., including specific proportions of different pore sizes, is to better control the size and distribution of the silicon nanomaterials.

In some embodiments, the pore sizes of the porous matrix are classified into three distinct ranges, each corresponding to a deposition region for different forms of silicon nanoparticles or the assembly of silicon nanoparticles and heteroatom layers. The pore channels of the above porous matrix include first pore channels, second pore channels, and third pore channels. A pore size of the first pore channels is d1, where 0.35 nm≤d1≤2 nm. A pore size of the second pore channels is d2, where 2 nm<d2≤10 nm. A pore size of the third pore channels is d3, where 10 nm<d3≤50 nm. When the silicon-containing precursor enters the smaller first pore channels, decomposition occurs in the pore channels to form the silicon nanoparticles. Optionally, due to variations in deposition conditions, the closed pores may remain in the first pore channels. A moderate number of closed pores may provide buffer spaces for the volume expansion of silicon during lithiation, thereby reducing an expansion rate of an electrode plate. The second pore channels are larger, and continuous deposition of the silicon-containing precursor in these pore channels may produce relatively large silicon nanoparticles. However, such relatively large silicon nanoparticles undergo more significant volume changes during charge-discharge cycles of the lithium-ion battery, leading to repeated destruction and regeneration of the SEI. Such volume changes also make the silicon nanoparticles prone to cracking or even pulverization, causing loss of electrical contact and resulting in continuous capacity fading of the battery. Therefore, for the larger pore channels, it is necessary to introduce the heteroatom-containing precursor during and/or intermittently during the deposition of the silicon nanoparticles. Heteroatom-containing substances formed by decomposition further separate the silicon nanoparticles in the larger pore channels, ensuring that all formed silicon nanoparticles have a relatively small size.

According to International Union of Pure and Applied Chemistry (IUPAC) classification of material pore sizes, the above first pore channels are micropores, while both the second and third pore channels are mesopores. If the porous matrix contains only micropores, the silicon-containing precursor may easily be blocked at pore mouths of the pore channels during migration. As a result, the silicon-containing precursor during subsequent deposition processes cannot enter the pore channels for deposition and instead deposits on an outer surface of the matrix material, leading to excessive closed pores and a silicon-rich material surface. Although excessive closed pores may reduce the expansion rate of the electrode plate, they lead to decreased structural stability of the composite material. The silicon-rich material surface tends to form larger silicon particles, resulting in poor cycling stability. On the other hand, if the porous matrix contains a high proportion of mesopores, the assembly of silicon nanoparticles and heteroatom-containing layers may be formed in the pore channels of the matrix material by controlling the deposition process. However, the matrix material composed solely of mesopores requires the use of expensive organic templates or hard-template methods for preparation, resulting in a high cost of the matrix material. In addition, a higher proportion of mesopores necessitates more heteroatom-containing layers to separate the silicon nanoparticles, which increases the heteroatom content in the composite material and reduces the content of silicon, which provides a high reversible lithiation capacity, thereby lowering both the specific capacity and the initial coulombic efficiency of the material. Therefore, the pore size distribution of the porous matrix requires a certain amount of micropores and mesopores, and the mesopore size should not be too large. In some embodiments, a volume proportion of the first pore channels in the pore channels of the porous matrix is 30-95% (e.g., 30%, 40%, 50%, 60%, 70%, 80%, 90%, 95%, or any range between any two of these values), a volume proportion of the second pore channels in the pore channels of the porous matrix is 1-60% (e.g., 1%, 5%, 10%, 15%, 20%, 30%, 40%, 50%, 60%, or any range between any two of these values), and a volume proportion of the third pore channels in the pore channels of the porous matrix is 0-15% (e.g., 0%, 2%, 5%, 7%, 10%, 12%, 15%, or any range between any two of these values). The pore sizes and distribution of the multi-level pore channels of the porous matrix fall within the above ranges. The silicon-based composite material exhibits superior electrical performance and cycling stability.

According to the pore size and distribution of the porous matrix, gas adsorption tests such as N₂ adsorption, CO₂ adsorption, Ar adsorption, etc., may be performed on the porous matrix before the deposition of the silicon-containing precursor. By simulating an adsorption isotherm, pore distribution information may be obtained. The silicon-based composite material may be digested in Hydrogen Fluoride (HF) to remove Si from the composite material. Gas adsorption tests may then be performed on the porous carbon material obtained after digestion, and the pore distribution may be analyzed.

In summary, the pore channel structures having the multi-level pore sizes of the porous matrix serve two functions. First, during the deposition process of the silicon-containing precursor or the silicon-containing precursor and the heteroatom-containing precursor, the multi-level pore size characteristic of the matrix material facilitates the transport of substances and energy (heat) during the silicon infiltration process and enables the formation of controllable silicon particle sizes. Second, in the obtained silicon-based composite material, the silicon nanoparticles, or the assembly of silicon nanoparticles and heteroatom layers, are separated by the matrix material to form a dense structure, thereby improving the mechanical strength of the composite material. The matrix material constrains and separates the silicon nanoparticles, thereby alleviating the expansion of the silicon nanoparticles during lithiation. A small number of closed pores adjacent to the silicon nanoparticles may serve as buffer spaces for expansion, and graphite-like layers of the carbon material may also provide buffer spaces through reduced interlayer spacing or layer dislocations.

### [Silicon nanoparticle]

Nanosizing of the silicon particles is the most important means to suppress the expansion of silicon during lithiation. Larger silicon nanoparticles undergo more significant volume changes during charge-discharge cycles of the lithium-ion battery, leading to repeated destruction and regeneration of the SEI. Such volume changes also make the silicon nanoparticles prone to cracking or even pulverization, causing loss of electrical contact and resulting in continuous capacity fading of the battery. Controlled deposition of the silicon nanoparticles is performed on a porous matrix with controlled pore sizes. The maximum size of the silicon nanoparticles is limited by the pore size of the porous matrix, which cannot be achieved by conventional silicon-carbon composite materials formed by solid-phase grinding of silicon and carbon particles.

As described above, in order to suppress the expansion of silicon during lithiation and improve the cycling stability of the silicon-based composite material in the lithium-ion battery, the silicon-based composite material should have a sufficiently small particle size. In some embodiments, the size of the silicon nanoparticles is 0.35-10 nm. In some embodiments, according to the size of the silicon nanoparticles, the silicon nanoparticles in the silicon-based composite material may be classified into three types, including the first silicon nanoparticles, the second silicon nanoparticles, and the third silicon nanoparticles. The size of the first silicon nanoparticles is D1, where 0.35 nm≤D1<2 nm. The size of the second silicon nanoparticles is D2, where 2 nm≤D2<5 nm. The size of the third silicon nanoparticles is D3, where 5 nm≤D3≤10 nm.

By controlling the pore size of the porous matrix and controllably introducing heteroatom layer deposition, the size distribution of the silicon nanoparticles may be controlled. The pore size of the porous matrix is the primary controlling factor for the pore size of the silicon nanoparticles. The size of the silicon nanoparticles is not greater than the pore size of the porous matrix. For larger pore sizes of the porous matrix, the directly obtained silicon nanoparticles are larger, which can lead to significant volume changes during lithiation-delithiation cycles and cause a decline in cycling stability. Therefore, the present invention introduces the heteroatoms during or intermittently with the silicon deposition process to limit the excessive growth of the silicon nanoparticles, thereby controlling the size of the silicon nanoparticles within a certain range. The size of the assembly of silicon nanoparticles and heteroatom layers is not greater than the pore size of the porous matrix. In some embodiments, a mass content of the first silicon nanoparticles in the silicon nanoparticles of the silicon-based composite material is 65-100%, such as 65%, 70%, 75%, 80%, 85%, 90%, 95%, 98%, 100%, or any range between any two of these values. A mass content of the second silicon nanoparticles in the silicon nanoparticles is 0-30%, such as 0, 1%, 2%, 5%, 10%, 20%, 30%, or any range between any two of these values. A mass content of the third silicon nanoparticles in the silicon nanoparticles is 0-5%, such as 0, 1%, 2%, 3%, 4%, 5%, or any range between any two of these values.

As mentioned above, the size of the silicon nanoparticles, or the size of the assembly of silicon nanoparticles and heteroatom layers, is not greater than the pore size of the porous matrix. Due to the small size of the silicon nanoparticles in the composite material, which are typically amorphous, a broadened peak envelope is observed at the position of the Si crystallization peak in a conventional XRD analysis, and the size information of the silicon nanoparticles cannot be obtained. A High Resolution Transmission Electron Microscope (HRTEM) may observe the lattice fringes of silicon, thereby enabling the calculation of the size of the silicon nanoparticles. However, this characterization method can only capture local information of the particles and cannot rapidly obtain the statistical distribution of the silicon nanoparticles in the material.

In the experimental data of the present invention, it has been found that silicon-based composite materials exhibiting different electrochemical performances can be obtained by controlling the pore size of the porous matrix and heteroatom introduction. In particular, when the porous matrix contains a relatively high proportion of micropores or a relatively high heteroatom content, a delithiation curve of a half battery exhibits substantially no plateau at 0.4-0.5 V, instead showing a distinct sloping delithiation curve. In contrast, if the porous matrix has larger pore sizes and no heteroatom spacing is introduced, a significant plateau appears at 0.4-0.5 V in the delithiation curve of the half battery. It is apparent that the silicon nanoparticles in the former case have smaller particle sizes than those in the latter case, indicating that the size of the silicon nanoparticles is ultimately reflected in the electrochemical performance.

The silicon nanoparticles in the silicon-based composite material undergo a transformation from amorphous to crystalline state at high temperatures, followed by grain growth. The porous matrix in the composite material does not undergo significant changes under such treatment conditions. Therefore, in the present invention, the silicon-based composite material is treated at 800 °C in an N₂ atmosphere, and subjected to XRD analysis to analyze the growth of silicon crystal grains, referred to as high-temperature XRD analysis. The grain size after high-temperature treatment may be calculated from the full width at half maximum of the silicon crystalline peak, and the relative intensity of the silicon crystalline peak to the amorphous peak may be used to estimate the proportion of grains that participate in crystallization, thereby indirectly reflecting the distribution of silicon nanoparticles of different sizes in the silicon-based composite material.

The delithiation plateau of a galvanostatic charge-discharge curve of the half battery may be obtained by normalizing the delithiation curve and taking the derivative with respect to voltage to obtain a dQ/dV value. By combining the results of high-temperature XRD analysis and the delithiation dQ/dV value, insights into the size of the silicon nanoparticles in the silicon-based composite material may be obtained. Based on the above analysis, the smaller the size of the silicon nanoparticles, the smaller the size of the silicon nanoparticles obtained by high-temperature XRD, the lower the delithiation dQ/dV value, and the shorter or even absent the delithiation plateau.

The silicon content determines the specific capacity of the silicon-based composite material. The higher the silicon content, the higher the lithiation specific capacity of the silicon-based composite material. However, on the other hand, if the silicon content is too high, achieving uniform distribution and nanosizing of the silicon nanoparticles becomes difficult. The silicon-based composite material lacks sufficient support structure and an electronically and ionically conductive matrix, and the expansion of silicon during lithiation cannot be well buffered or constrained, leading to poor cycling stability of the material. Therefore, the silicon content in the silicon-based composite material should be controlled within an appropriate range. In some embodiments, based on the total mass of the silicon-based composite material, the silicon content is 5-90%, such as 5%, 10%, 15%, 20%, 30%, 40%, 50%, 60%, 70%, 80%, 90%, or any range between any two of these values. Preferably, in some embodiments, when the silicon content is 30-60%, the silicon-based composite material exhibits more excellent electrical performance.

### [Heteroatom]

From the above description of the porous matrix and the pore channel structures thereof, and the silicon nanoparticles, it may be seen that the pore size distribution of the porous matrix requires a certain amount of micropores and mesopores, and the size of the mesopores should not be too large. Based on the pore channel structures having the multi-level pore sizes of the multi-level matrix, for the larger second and third pore channels, it is necessary to introduce the heteroatom-containing precursor during and/or intermittently during the deposition of the silicon nanoparticles. The heteroatom-containing substances formed by decomposition further separate the silicon nanoparticles, ensuring that all formed silicon nanoparticles have a relatively small size. On the other hand, the formation of strong Si-O bonds or Si-X bonds between heteroatoms such as O or other heteroatom X and the silicon nanoparticles may improve the mechanical strength of the silicon-based composite material, constrain the expansion of silicon during lithiation, or transfer the silicon lithiation-induced stress to the surrounding space, thereby improving the cycling stability of the silicon-based composite material in the lithium-ion battery.

In addition, by adjusting the deposition manner, the heteroatoms may also be located at the interface between the porous matrix and the silicon nanoparticles, thereby separating the porous matrix from the silicon nanoparticles while simultaneously improving the strength of the porous matrix. Such heteroatoms may also be present in the first pore channels of the porous matrix.

The term "heteroatom," as used herein with respect to the silicon nanoparticles in the pore channels of the porous matrix, specifically refers to atoms other than silicon. The specific type of the above heteroatom is not limited and may include, but is not limited to, any one or more of B, C, N, P, O, and S. In particular, when the heteroatom is O, the silicon-based composite material exhibits a superior ability to suppress volume expansion.

In some embodiments, the heteroatoms cover the surface of the silicon nanoparticles to form heteroatom layers, and a total thickness of the heteroatom layers is 0.5-50 nm, preferably 0.5-10 nm, and more preferably 0.5-2 nm (e.g., 0.5 nm, 0.8 nm, 1 nm, 1.5 nm, 2 nm, or any value therebetween); or, the heteroatoms are spaced between multiple silicon nanoparticles to form an assembly of silicon nanoparticles and heteroatom layers, which is present inside the pore channels of the porous matrix.

As described above, the heteroatoms are essential structural components of the silicon-based composite material. However, if the heteroatom content is too high, the specific capacity and initial coulombic efficiency of the composite material may be reduced. In some embodiments, based on the total mass of the silicon-based composite material, the heteroatom content is 0.1-10%. Preferably, when the heteroatom content is 0.5-5%, the silicon-based composite material has relatively high overall performance, such as relatively high specific capacity, initial coulombic efficiency, and cycling stability.

The above heteroatoms are defined with respect to the silicon nanoparticles in the pore channels of the porous matrix. For example, when the carbon-containing precursor is introduced during the silicon infiltration process to form carbon-containing heteroatom layers between the silicon nanoparticles, carbon atoms serve as heteroatoms with respect to the silicon nanoparticles. However, when the porous matrix is a carbon material, the content of carbon and heteroatoms between the silicon nanoparticles is difficult to determine by directly testing the composite material and can only be estimated based on the total carbon mass in the silicon-based composite material and the mass of the porous carbon prior to silicon infiltration. On the other hand, when the porous matrix is an oxide and oxygen atoms are selected to separate the silicon nanoparticles, the oxygen content serving as heteroatom can only be estimated in a similar manner. Of course, the oxygen content in the matrix also affects the capacity and initial coulombic efficiency of the composite material.

### [Assembly of silicon nanoparticles and heteroatoms]

As described above, in the pore channels of the porous matrix, the heteroatom-containing precursor may be introduced during and/or intermittently with the deposition of the silicon nanoparticles. The heteroatom-containing substances formed by decomposition further separate the silicon nanoparticles, ensuring that all formed silicon nanoparticles have a relatively small size. Therefore, in the second and third pore channels of the porous matrix, an assembly of silicon nanoparticles and heteroatoms is present. In the assembly of silicon nanoparticles and heteroatoms, the heteroatoms or heteroatom layers are present in the form of silicon-heteroatom compounds and exhibit a gradient structure. For example, when the heteroatoms are oxygen atoms, an oxygen atom layer is present between the silicon nanoparticles in the form of SiOₓ (0<x<1), and a concentration gradient of oxygen and silicon atoms is present in the oxygen layer. The closer to the silicon nanoparticle, the higher the concentration of silicon atoms and the lower the concentration of oxygen atoms; conversely, the farther from the silicon nanoparticle, the lower the concentration of silicon atoms and the higher the concentration of oxygen atoms. In particular, if the oxygen atom layer is located between two silicon nanoparticles, the concentration of oxygen atoms is the highest at the midpoint along the line connecting the two nanoparticles.

In the above assembly of silicon nanoparticles and heteroatoms, the heteroatoms separate the silicon nanoparticles and form strong chemical bonds with the silicon nanoparticles, such that the silicon-based composite material exhibits high mechanical strength and structural stability. More importantly, during the expansion process of the silicon nanoparticles during lithiation, the heteroatom layers may constrain the volume expansion of silicon, thereby reducing electrode plate expansion and improving the cycling stability of the battery.

Due to the high mechanical strength and structural stability, the material can more easily withstand pressure without damage. Therefore, a ratio of a compacted specific surface area to the specific surface area of the silicon-based composite material is relatively small. The compacted specific surface area refers to the specific surface area of the silicon-based composite material after compaction under a pressure of 4000 kgf/cm². In some embodiments, the specific surface area of the silicon-based composite material is 0.5-50 m²/g, preferably 0.5-10 m²/g, and more preferably 0.5-2 m²/g. In some embodiments, the compacted specific surface area is 1-20 times, preferably 1-10 times, and more preferably 1-5 times the specific surface area of the silicon-based composite material.

### [Coating layer]

In some embodiments, the above silicon-based composite material further includes a coating layer. A material of the coating layer is selected from one or more of a solid electrolyte (e.g., an LISICON-type solid electrolyte, an NASICON-type solid electrolyte, a perovskite-type solid electrolyte, a garnet-type solid electrolyte, or a sulfide solid electrolyte), a conductive polymer (e.g., polyethylene oxide, carboxymethyl cellulose, polyacrylic acid, or polyacrylonitrile), a carbonaceous material (e.g., carbon fiber, carbon nanotubes, graphite, graphene, or amorphous carbon), an elemental metal or alloy (e.g., metallic elements such as lithium, magnesium, copper, nickel, aluminum, or silver), a metal oxide (e.g., aluminum oxide, zinc oxide, magnesium oxide, zirconium oxide, or titanium oxide), a metal hydroxide, a metal halide, a metal sulfide, a metal phosphate, a borate-containing compound, sulfate-containing compound, a nitrate-containing compound, and a polyoxometalate. More preferably, the coating layer includes a carbonaceous material.

### B. Method for preparing silicon-based composite material

In a second typical implementation of the present invention, a method for preparing a silicon-based composite material is further provided. The preparation method includes: providing a porous matrix, the porous matrix being provided with three-dimensional intersecting pore channels having multi-level pore sizes; and contacting a silicon-containing precursor and a heteroatom-containing precursor with the porous matrix, such that silicon nanoparticles and heteroatoms are filled into the pore channels of the porous matrix, where the heteroatoms are doped into the silicon nanoparticles or located between multiple silicon nanoparticles. The above porous matrix, pore channels, silicon nanoparticles, and heteroatoms respectively have the same meanings as those in the above first typical implementation, which will not be elaborated herein.

By applying the technical solutions of the present invention, in the method for preparing the silicon-based composite material provided in the present invention, the silicon-containing precursor and the heteroatom-containing precursor are in contact with the porous matrix, and chemical vapor deposition is performed in the pore channels of the porous matrix to form the assembly of silicon nanoparticles and heteroatoms filling the pore channels of the porous matrix. By doping the heteroatoms into the silicon nanoparticles to separate and constrain the silicon nanoparticles, the size and distribution of the silicon material in the pore channels are controlled, such that the silicon material is uniformly dispersed in the three-dimensional intersecting pore channels of the porous matrix, thereby effectively alleviating the volume effect of silicon during charge-discharge cycles, avoiding structural collapse of the composite material caused by the expansion of silicon during lithiation, and improving the cycling stability of the electrode.

### [Porous matrix and pore channel structure thereof]

In order to further alleviate the volume effect of silicon during the discharge process, the porous matrix includes multi-level pore sizes and has an appropriate proportion of multi-level pore size distribution, which facilitates the transport of substances and energy (heat) during the silicon infiltration process and enables the formation of silicon nanoparticles with controllable sizes. In the first pore channels, the silicon nanoparticles have a relatively small size. During the deposition process, the pore blockage by the silicon nanoparticles facilitates the formation of an appropriate amount of closed pores, thereby alleviating silicon expansion and improving cycling performance. However, if the first pore channels are excessive (i.e., a volume proportion of the first pore channels in the total pore channels is greater than 95%), the silicon-containing precursor tends to block the pore mouths during the migration process in the channels. As a result, the silicon-containing precursor during the subsequent deposition processes can no longer enter the channels for deposition and instead deposits on an outer surface of the porous matrix. This may lead to two adverse effects: i) a large number of pores remain in the final silicon-based composite material, reducing the material strength, and during the electrode plate compaction process, the material is prone to crushing, forming numerous open pores, which increases the specific surface area and decreases the initial coulombic efficiency; moreover, the residual pores further reduce the material strength and form stress-weak points during the cycles; and ii) the material surface becomes silicon-rich, resulting in the formation of relatively large silicon particles on the surface, thereby leading to poor cycling stability.

In the above preparation method, in the three-dimensional intersecting pore channels of the porous matrix, the first pore channels are filled with a single silicon nanoparticle and optionally heteroatoms, while the second pore channels and optionally the third pore channels are filled with multiple silicon nanoparticles separated by the heteroatoms. The heteroatoms are spaced between multiple silicon nanoparticles and partially or fully cover the surface of multiple silicon nanoparticles. Through the separation by the heteroatoms, the sizes of multiple silicon nanoparticles in the pore channels are small, thereby avoiding the formation of the relatively large silicon particles and significantly improving the cycling stability of a composite material electrode.

### [Silicon-containing precursor]

The specific substance of the above silicon-containing precursor is not limited, and any substance capable of depositing silicon atoms may be used, including, but not limited to, any one of or a mixture of two or more of silane, disilane, trisilane, halosilane, polysilane, thiazole and a derivative thereof, and silafluorene and a derivative thereof.

### [Heteroatom-containing precursor]

The specific substance of the above heteroatom-containing precursor is also not limited. Any substance capable of depositing heteroatoms may be used, including, but not limited to, any one or a mixture of at least two precursors selected from an oxygen-containing precursor, a carbon-containing precursor, a nitrogen-containing precursor, a phosphorus-containing precursor, a sulfur-containing precursor, and a boron-containing precursor. The oxygen-containing precursor includes, but is not limited to, O₂, H₂O, CO₂, CO, and O₃. The carbon-containing precursor includes, but is not limited to, methane, ethane, propane, butane, ethylene, propylene, butene, acetylene, propyne, and the like. The nitrogen-containing precursor includes, but is not limited to, an inorganic nitrogen source and/or a nitrogen-containing organic compound (e.g., NH₃, NO, N₂O, and acetonitrile). The phosphorus-containing precursor includes, but is not limited to, an inorganic phosphorus source and/or a phosphorus-containing organic compound (e.g., PH₃ and POCl₃). The sulfur-containing precursor includes a sulfur-containing organic compound (e.g., H₂S and SO₂). The boron-containing precursor includes, but is not limited to, any one or a mixture of two or more of an inorganic boron source and/or a boron-containing organic compound (e.g., B(CH₃)₃), or a composite precursor, such as a carbon- and oxygen-containing precursor, including, but not limited to, methanol, ethanol, n-propanol, isopropanol, butanol, acetone, butanone, and the like.

### [Chemical vapor deposition]

In some embodiments, the silicon-containing precursor and the heteroatom-containing precursor are in contact with the porous matrix at a temperature of 150-1000 °C (e.g., 150 °C, 200 °C, 300 °C, 500 °C, 600 °C, 800 °C, 1000 °C, or any temperature therebetween) for 0.1-100 h (e.g., 0.1 h, 0.2 h, 0.5 h, 0.8 h, 1 h, 2 h, 5 h, 8 h, 10 h, 20 h, 50 h, or any time therebetween). Preferably, the silicon-containing precursor and the heteroatom-containing precursor are in contact with the porous matrix at a temperature of 200-700 °C.

The manner in which the silicon-containing precursor and the heteroatom-containing precursor are in contact with the porous matrix and chemical vapor deposition is performed may vary, and mainly includes three types: (1) the silicon-containing precursor and the heteroatom-containing precursor are alternately in contact with the porous matrix; (2) the silicon-containing precursor and the heteroatom-containing precursor are simultaneously in contact with the porous matrix; and (3) the silicon-containing precursor and a mixed gas containing the silicon-containing precursor and the heteroatom-containing precursor are alternately in contact with the porous matrix. Preferably, the silicon-containing precursor is continuously in contact with the porous matrix, and the heteroatom-containing precursor is intermittently introduced during this process.

In some embodiments, the method for preparing the silicon-based composite material is performed according to the following steps: S1, providing a porous matrix, the porous matrix being provided with three-dimensional intersecting pore channels having multi-level pore sizes, and placing the porous matrix in a furnace; S2, including: S2-1, introducing a first mixed gas containing a silicon-containing precursor and an inert gas into the furnace, where a volume concentration of the silicon-containing precursor in the first mixed gas is 1-50%, preferably 10-50%, maintaining the temperature at 150-1000 °C for 0.5-15 h, and stopping introduction of the silicon-containing precursor; and S2-2, introducing a second mixed gas containing a heteroatom-containing precursor and an inert gas into the furnace, where a volume concentration of the heteroatom-containing precursor in the second mixed gas is 0.1-50%, preferably 0.1-10%, maintaining the temperature at 150-1000 °C for 0.1-5 h, and stopping introduction of the heteroatom-containing precursor; and sequentially repeating S2-1 and S2-2 for 2-50 times to obtain the silicon-based composite material.

In some embodiments, the method for preparing the silicon-based composite material is performed according to the following steps: S1, providing a porous matrix, and placing the porous matrix in a furnace; and S2, introducing a third mixed gas containing a silicon-containing precursor, a heteroatom-containing precursor, and an inert gas into the furnace, where in the third mixed gas, a volume concentration of the silicon-containing precursor is 1-50%, and a volume concentration of the heteroatom-containing precursor is 0.001-5%, maintaining the temperature at 150-1000 °C for 0.5-100 h, stopping introduction of the heteroatom-containing precursor, and cooling in the inert gas to obtain the silicon-based composite material.

In some embodiments, the method for preparing the silicon-based composite material is performed according to the following steps: S1, providing a porous matrix, and placing the porous matrix in a furnace; S2, including: S2-1, introducing a first mixed gas containing a silicon-containing precursor and an inert gas into the furnace, where a volume concentration of the silicon-containing precursor in the first mixed gas is 1-50%, maintaining the temperature at 150-1000 °C for 0.5-15 h, and stopping introduction of the silicon-containing precursor; and S2-2, introducing a third mixed gas containing a silicon-containing precursor, a heteroatom-containing precursor, and an inert gas into the furnace, where in the third mixed gas, a volume concentration of the silicon-containing precursor is 1-50%, and a volume concentration of the heteroatom-containing precursor is 0.001-5%, maintaining the temperature at 150-1000 °C for 0.1-5 h, and stopping introduction of the heteroatom-containing precursor; and sequentially repeating S2-1 and S2-2 for 2-50 times to obtain the silicon-based composite material.

As is well known to those skilled in the art, the above S1 and S2 include a crushing and grading process for the porous matrix and/or the silicon-based composite material. In some embodiments, a median particle size d_{V,50} of the obtained silicon-based composite material is 5-20 µm, and a span (d_{V,90}-d_{V,10})/d_{V,50} is 0.8-2.0. Preferably, the median particle size d_{V,50} of the silicon-based composite material is 6-12 µm, and the span (d_{V,90}-d_{V,10})/d_{V,50} is 0.8-1.2.

In some embodiments, the preparation method further includes S3 performed after S2: performing a coating treatment on the composite material obtained in S2 to obtain a silicon-based composite material having a coating layer on the surface. Preferably, a material of the coating layer is selected from one or more of a solid electrolyte, a conductive polymer, a carbonaceous material, a metal, an alloy, a metal oxide, a metal hydroxide, a metal halide, a metal sulfide, a metal phosphate, a borate-containing compound, a sulfate-containing compound, a nitrate-containing compound, and a polyoxometalate. More preferably, the coating layer includes a carbonaceous material.

### C. Anode

In a third typical implementation of the present invention, a anode is further provided, including a anode active substance. The anode active substance includes any one of the silicon-based composite materials provided in the above first typical implementation or the silicon-based composite material obtained by any one of the preparation methods provided in the above second typical implementation.

The anode provided in the present invention uses the above silicon-based composite material as the anode active material, which may effectively avoid structural collapse caused by the expansion of silicon during lithiation and improve the cycling stability of the electrode. In the pore channels with the multi-level pore sizes of the porous matrix, the silicon nanoparticles or the assembly of silicon nanoparticles and heteroatoms are deposited. The heteroatoms are spaced between the silicon nanoparticles. The strong Si-X bonds (X being a heteroatom) can confine the expansion of silicon during lithiation or transfer the silicon lithiation-induced stress to the surrounding space (such as the matrix), thereby effectively controlling the volume expansion during charge-discharge cycles. The porous matrix, serving as the matrix material supporting the silicon nanoparticles and the heteroatoms, may also alleviate the expansion of the silicon nanoparticles during lithiation to a certain extent. For example, a small number of closed pores adjacent to the silicon nanoparticles in the matrix may serve as buffer spaces for volume expansion, thereby suppressing electrode plate expansion and further improving the cycling stability of the electrode.

### D. Battery

In a fourth typical implementation of the present invention, a lithium-ion battery is further provided. The lithium-ion battery includes the anode provided in the third typical implementation. By using the above anode, the electrical performance and cycling stability of the lithium-ion battery are effectively improved, and the battery has broad application prospects.

The beneficial effects of the present invention will be further illustrated below with reference to the embodiments and comparative examples.

### Embodiment 1

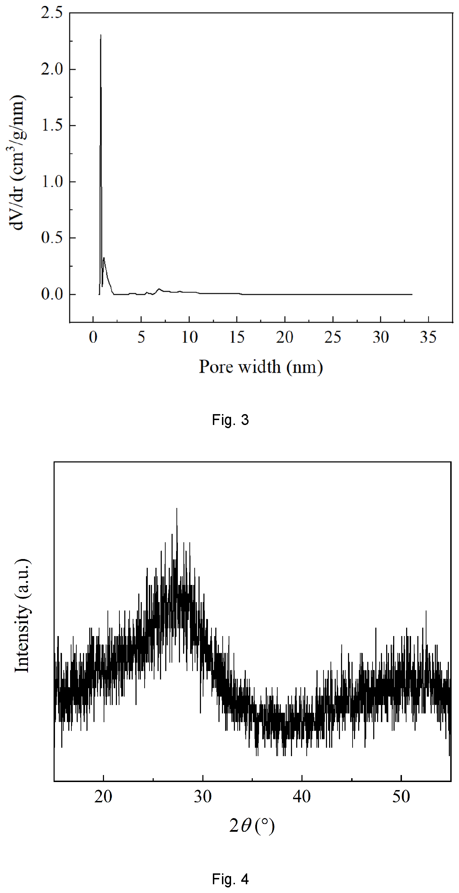

The present embodiment provided a silicon-based composite material. The silicon-based composite material used porous carbon as a porous matrix, and silicon particles and heteroatoms were supported on the porous matrix. A specific surface area of the porous carbon was 1580 m²/g, and a pore volume was 0.70 cm³/g. The porous carbon was provided with three-dimensional intersecting pore channels having multi-level pore sizes. The pore channels included first pore channels and second pore channels. A pore diameter of the first pore channels was d1, where 0.35 nm≤d1≤2 nm, and a volume proportion was 90%. A pore size of the second pore channels was d2, where 2 nm<d2≤10 nm, and a volume proportion was 10%. The pore size distribution was shown in Fig. 3. Silicon nanoparticles included first silicon nanoparticles and second silicon nanoparticles. A size of the first silicon nanoparticles was D1, where 0.35 nm≤D1≤2 nm. A size of the second silicon nanoparticles was D2, where 2 nm<D2≤5 nm. The first pore channels were filled with the first silicon nanoparticles, and the second pore channels were filled with an assembly of first silicon nanoparticles and/or second silicon nanoparticles and oxygen atoms. The oxygen atoms were doped into the silicon nanoparticles in the second pore channels.

The silicon-based composite material was prepared according to the following steps.

The porous carbon was placed in an atmosphere furnace, heated from room temperature to 600 °C at a rate of 2 °C/min in an N₂ atmosphere, and then maintained at 600 °C for 5 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 200 °C, the atmosphere was switched to a second mixed gas of O₂ and N₂ (a volume content of O₂ was 0.01%), and maintained at 200 °C for 0.2 h in the atmosphere of the second mixed gas to perform oxygen atom deposition. Silicon deposition and oxygen atom deposition were sequentially performed on the porous carbon for 3 cycles. The material was then naturally cooled under N₂ protection, and subjected to crushing and grading to obtain the silicon-based composite material. In the obtained silicon-based composite material, a silicon content was 53.2%, an oxygen content was 1.5%, d_{V,50} was 8 µm, and a span (d_{V,90}-d_{V,10})/d_{V,50} was 1.05.

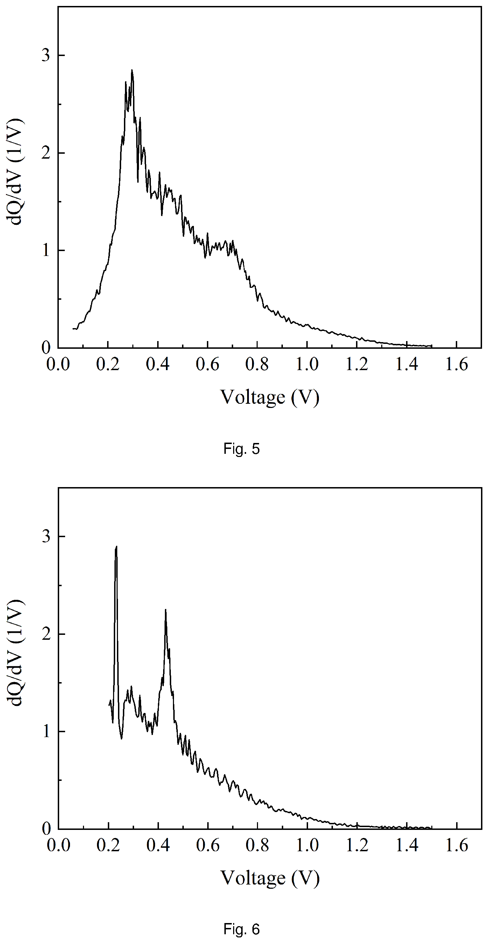

The silicon-based composite material provided in the present embodiment was subjected to XRD analysis, and the obtained spectrum was shown in Fig. 4. As shown in Fig. 4, no obvious crystalline peak was at the position of the Si crystalline peak (2θ = 28.4°) in the nano-silicon/carbon composite material provided in the present invention, but rather a broadened peak envelope was observed, indicating that the silicon nanoparticles dispersed in the pores of the porous matrix had an extremely small particle size due to the dual separation by the porous matrix and the heteroatoms, and were amorphous or near-amorphous. A first-cycle delithiation curve of a half-battery specific capacity-voltage curve for the pure product of Embodiment 1 showed no obvious plateau in a voltage region of 0.4-0.5 V. After capacity normalization of this delithiation curve, a first-order differential of the normalized capacity with respect to voltage was performed, and the obtained dQ/dV curve. As shown in Fig. 5, it might be seen that the curve exhibited no obvious peak in the 0.4-0.5 V region, and the maximum dQ/dV value was 1.69, which was consistent with the absence of a plateau region in the half-battery specific capacity-voltage curve in this voltage region. This result further indicated that the silicon nanoparticles in the silicon-based composite material obtained in Embodiment 1 had an extremely small size.

The silicon nanoparticles in the silicon-based composite material of Embodiment 1 were jointly constrained by the porous matrix and the heteroatoms, significantly enhancing the structural strength of the material. After compaction at 4000 kgf/cm², the specific surface area increased only from 3.1 m²/g to 12.5 m²/g, exhibiting high compressive strength and high structural stability during battery fabrication and cycling processes.

### Comparative example 1

The difference from Embodiment 1 was that no heteroatoms were added during the silicon infiltration process, and only the deposition of the silicon-containing precursor was performed. That is, the silicon deposition step was performed as follows: the porous carbon was placed in an atmosphere furnace, heated from room temperature to 600 °C at a rate of 2 °C/min in an N₂ atmosphere, and then maintained at 600 °C for 5 h in an atmosphere of a first mixed gas of SiH₄ and N₂ (a volume content of SiH₄ was 20%) to perform silicon deposition. After crushing and grading, a silicon-based composite material was obtained. In the obtained silicon-based composite material, a silicon content was 51.3%, an oxygen content was 0.2%, d_{V,50} was 8 µm, and a span (d_{V,90}-d_{V,10})/d_{V,50} was 1.05.

Fig. 6 showed a dQ/dV diagram corresponding to Comparative Example 1. It might be seen that, different from Embodiment 1, the dQ/dV diagram of Comparative example 1 exhibited an obvious peak at 0.4-0.5 V, and the maximum dQ/dV value reached 2.25. This corresponded to a relatively large size of the silicon nanoparticles, indicating that when silicon infiltration was performed under the same porous matrix conditions, if the porous matrix contained mesopores and no heteroatom separation was applied, larger silicon particles were generated, which ultimately resulted in a deterioration of the cycling stability of the material.

After compaction at 4000 kgf/cm², the specific surface area of the silicon-based composite material of Comparative example 1 increased from 3.4 m²/g to 116 m²/g. The material exhibited poor compressive strength and low structural stability during battery fabrication and cycling processes.

### Embodiment 2

The present embodiment provided a silicon-based composite material. The difference between this silicon-based composite material and that of Embodiment 1 was that a specific surface area of the porous carbon was 1100 m²/g, and a pore volume was 0.72 cm³/g. The pore channels of the porous carbon further included third pore channels. A pore diameter of the third pore channels was d3, where 10 nm<d3≤50 nm. A volume proportion of the first pore channels was 30%, a volume proportion of the second pore channels was 55%, and a volume proportion of the third pore channels was 15%. The first pore channels were filled with the first silicon nanoparticles, while the second pore channels and the third pore channels were each filled with at least one of the first silicon nanoparticles, the second silicon nanoparticles, and the third silicon nanoparticles.

The silicon-based composite material was prepared according to the following steps.

The porous carbon was placed in an atmosphere furnace, heated from room temperature to 600 °C at a rate of 2 °C/min in an N₂ atmosphere, and then maintained at 600 °C for 1 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 200 °C, the atmosphere was switched to a second mixed gas of O₂ and N₂ (a volume content of O₂ was 0.01%), and maintained at 200 °C for 0.1 h in the atmosphere of the second mixed gas to perform oxygen atom deposition. Silicon deposition and oxygen atom deposition were sequentially performed on the porous carbon for 15 cycles. The material was then naturally cooled under N₂ protection, and subjected to crushing and grading to obtain the silicon-based composite material. In the obtained silicon-based composite material, a silicon content was 51.5%, an oxygen content was 5.7%, d_{V,50} was 8 µm, and a span (d_{V,90}-d_{V,10})/d_{V,50} was 1.05.

### Embodiment 3

The present embodiment provided a silicon-based composite material. The difference between this silicon-based composite material and that of Embodiment 1 was that a specific surface area of the porous carbon was 1356 m²/g, and a pore volume was 0.72 cm³/g. The pore channels of the porous carbon further included third pore channels. A pore diameter of the third pore channels was d3, where 10 nm<d3≤50 nm. A volume proportion of the first pore channels was 90%, a volume proportion of the second pore channels was 1%, and a volume proportion of the third pore channels was 9%. The first pore channels were filled with the first silicon nanoparticles, while the second pore channels and the third pore channels were each filled with at least one of the first silicon nanoparticles, the second silicon nanoparticles, and the third silicon nanoparticles.

The silicon-based composite material was prepared according to the following steps.

The porous carbon was placed in an atmosphere furnace, heated from room temperature to 600 °C at a rate of 2 °C/min in an N₂ atmosphere, and then maintained at 600 °C for 3 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 200 °C, the atmosphere was switched to a second mixed gas of O₂ and N₂ (a volume content of O₂ was 0.01%), and maintained at 200 °C for 0.2 h in the atmosphere of the second mixed gas to perform oxygen atom deposition. Silicon deposition and oxygen atom deposition were sequentially performed on the porous carbon for 5 cycles. The material was then naturally cooled under N₂ protection, and subjected to crushing and grading to obtain the silicon-based composite material. In the obtained silicon-based composite material, a silicon content was 52.1%, an oxygen content was 2.1%, d_{V,50} was 8 µm, and a span (d_{V,90}-d_{V,10})/d_{V,50} was 1.05.

### Embodiment 4

The present embodiment provided a silicon-based composite material. The difference between this silicon-based composite material and that of Embodiment 1 was that a specific surface area of the porous carbon was 305 m²/g, and a pore volume was 0.25 cm³/g. The pore channels of the porous carbon further included third pore channels. A pore diameter of the third pore channels was d3, where 10 nm<d3≤50 nm. A volume proportion of the first pore channels was 36%, a volume proportion of the second pore channels was 60%, and a volume proportion of the third pore channels was 4%. The first pore channels were filled with the first silicon nanoparticles, while the second pore channels and the third pore channels were each filled with at least one of the first silicon nanoparticles, the second silicon nanoparticles, and the third silicon nanoparticles.

The silicon-based composite material was prepared according to the following steps.

The porous carbon was placed in an atmosphere furnace, heated from room temperature to 600 °C at a rate of 2 °C/min in an N₂ atmosphere, and then maintained at 600 °C for 2 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 400 °C, the atmosphere was switched to a second mixed gas of CO₂ and N₂ (a volume content of CO₂ was 1%), and maintained at 400 °C for 0.2 h in the atmosphere of the second mixed gas to perform oxygen atom deposition. Silicon deposition and oxygen atom deposition were sequentially performed on the porous carbon for 3 cycles. The material was then naturally cooled under N₂ protection. Subsequently, the material was heated to 600 °C in the N₂ atmosphere, the gas was switched to 10% C₂H₂-N₂, and the temperature was maintained for 2 h. After crushing and grading, a silicon-based composite material was obtained. In the obtained silicon-based composite material, a silicon content was 6.5%, an oxygen content was 3.2%, d_{V,50} was 8 µm, and a span (d_{V,90}-d_{V,10})/d_{V,50} was 1.05.

### Embodiment 5

The present embodiment provided a silicon-based composite material. The difference between this silicon-based composite material and that of Embodiment 1 was that a specific surface area of the porous carbon was 1592 m²/g, and a pore volume was 1.20 cm³/g. The pore channels of the porous carbon further included third pore channels. A pore diameter of the third pore channels was d3, where 10 nm<d3≤50 nm. A volume proportion of the first pore channels was 61%, a volume proportion of the second pore channels was 37%, and a volume proportion of the third pore channels was 2%. The first pore channels were filled with the first silicon nanoparticles, while the second pore channels and the third pore channels were each filled with at least one of the first silicon nanoparticles, the second silicon nanoparticles, and the third silicon nanoparticles.

The silicon-based composite material was prepared according to the following steps.

The porous carbon was placed in an atmosphere furnace, heated from room temperature to 600 °C at a rate of 2 °C/min in an N₂ atmosphere, and then maintained at 600 °C for 2 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 200 °C, the atmosphere was switched to a second mixed gas of O₂ and N₂ (a volume content of O₂ was 0.01%), and maintained at 200 °C for 0.1 h in the atmosphere of the second mixed gas to perform oxygen atom deposition. Silicon deposition and oxygen atom deposition were sequentially performed on the porous carbon for 15 cycles. The material was then naturally cooled under N₂ protection, and subjected to crushing and grading to obtain the silicon-based composite material. In the obtained silicon-based composite material, a silicon content was 81.2%, an oxygen content was 5.2%, d_{V,50} was 8 µm, and a span (d_{V,90}-d_{V,10})/d_{V,50} was 1.05.

### Embodiment 6

Commercial porous aluminum oxide was selected as the porous matrix material. A specific surface area of the porous aluminum oxide was 675 m²/g, and a pore volume was 0.52 cm³/g. A volume proportion of the first pore channels was 50%, a volume proportion of the second pore channels was 40%, and a volume proportion of the third pore channels was 10%. The first pore channels were filled with the first silicon nanoparticles, while the second pore channels and the third pore channels were each filled with at least one of the first silicon nanoparticles, the second silicon nanoparticles, and the third silicon nanoparticles.

The silicon-based composite material was prepared according to the following steps.

The porous aluminum oxide was placed in an atmosphere furnace, heated from room temperature to 600 °C at a rate of 2 °C/min in an N₂ atmosphere, and then maintained at 600 °C for 2 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 200 °C, the atmosphere was switched to a second mixed gas of O₂ and N₂ (a volume content of O₂ was 0.01%), and maintained at 200 °C for 0.1 h in the atmosphere of the second mixed gas to perform oxygen atom deposition. Silicon deposition and oxygen atom deposition were sequentially performed on the porous aluminum oxide for 5 cycles. The material was then heated to 600 °C in the N₂ atmosphere, the gas was switched to 10% C₂H₂-N₂, and the temperature was maintained for 2 h. After crushing and grading, a silicon-based composite material was obtained. In the obtained silicon-based composite material, a silicon content was 48.2%, a total oxygen content was 23.5%, d_{V,50} was 8 µm, and a span (d_{V,90}-d_{V,10})/d_{V,50} was 1.05.

### Embodiment 7

A commercial silicoaluminophosphate molecular sieve SAPO-18 was selected as the porous matrix material. A specific surface area of the silicoaluminophosphate molecular sieve was 722 m²/g, and a pore volume was 0.71 cm³/g. A volume proportion of the first pore channels was 42%, a volume proportion of the second pore channels was 52%, and a volume proportion of the third pore channels was 6%. The first pore channels were filled with the first silicon nanoparticles, while the second pore channels and the third pore channels were each filled with at least one of the first silicon nanoparticles, the second silicon nanoparticles, and the third silicon nanoparticles.

The silicoaluminophosphate molecular sieve was placed in an atmosphere furnace, heated from room temperature to 600 °C at a rate of 2 °C/min in an N₂ atmosphere, and then maintained at 600 °C for 2 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 200 °C, the atmosphere was switched to a second mixed gas of O₂ and N₂ (a volume content of O₂ was 0.01%), and maintained at 200 °C for 0.1 h in the atmosphere of the second mixed gas to perform oxygen atom deposition. Silicon deposition and oxygen atom deposition were sequentially performed on the silicoaluminophosphate molecular sieve for 6 cycles. The material was then heated to 600 °C in the N₂ atmosphere, the gas was switched to 10% C₂H₂-N₂, and the temperature was maintained for 2 h. After crushing and grading, a silicon-based composite material was obtained. In the obtained silicon-based composite material, a silicon content was 51.3%, a total oxygen content was 21.2%, d_{V,50} was 8 µm, and a span (d_{V,90}-d_{V,10})/d_{V,50} was 1.05.

### Embodiment 8

The oxygen deposition in Embodiment 1 was changed to nitrogen deposition, the second mixed gas was changed to a 0.1% NH₃-N₂ mixed gas, the nitrogen deposition was performed at 400 °C, and the remaining steps were the same as those in Embodiment 1, thereby obtaining an N-doped silicon-based composite material.

### Embodiment 9

The oxygen deposition in Embodiment 1 was changed to phosphorus deposition, the second mixed gas was changed to a 0.1% PH₃-N₂ mixed gas, the phosphorus deposition was performed at 400 °C, and the remaining steps were the same as those in Embodiment 1, thereby obtaining a P-doped silicon-based composite material.

### Embodiment 10

The oxygen deposition in Embodiment 1 was changed to boron deposition, the second mixed gas was changed to a 0.05% B(CH₃)₃-N₂ mixed gas, the boron deposition was performed at 400 °C, and the remaining steps were the same as those in Embodiment 1, thereby obtaining a B-doped silicon-based composite material.

### Embodiment 11

The difference between the present embodiment and Embodiment 1 was that the silicon-based composite material obtained in Embodiment 1 was subjected to C₂H₂ chemical vapor deposition to form a carbon coating layer on the surface, where a thickness of the carbon coating layer was 10 nm, thereby obtaining a carbon-coated silicon-based composite material.

### Embodiment 12

The difference between the present embodiment and Embodiment 1 was that a LiPO₃ coating layer was formed on the surface of the silicon-based composite material obtained in Embodiment 1, where a thickness of the LiPO₃ coating layer was 5nm, thereby obtaining a LiPO₃-coated silicon-based composite material. The specific coating steps were as follows: the silicon-based composite material obtained in Embodiment 1 was mixed with a LiPO₃ solution at a mass ratio of the silicon-based composite material to LiPO₃ of 100/1, and after spray drying, a silicon-based composite material coated with LiPO₃ was obtained.

### Embodiment 13

The present embodiment provided a silicon-based composite material. The difference between this silicon-based composite material and that of Embodiment 1 was that a specific surface area of the porous carbon was 221 m²/g, and a pore volume was 0.62 cm³/g. A volume proportion of the first pore channels was 10%, a volume proportion of the second pore channels was 38%, and a volume proportion of the third pore channels was 52%. The first pore channels were filled with the first silicon nanoparticles, while the second pore channels and the third pore channels were each filled with at least one of the first silicon nanoparticles, the second silicon nanoparticles, and the third silicon nanoparticles.

The silicon-based composite material was prepared according to the following steps.

The porous carbon was placed in an atmosphere furnace, heated from room temperature to 600 °C at a rate of 2 °C/min in an N₂ atmosphere, and then maintained at 600 °C for 0.5 h in an atmosphere of a first mixed gas of SiH₄ and N₂ (a volume content of SiH₄ was 20%) to perform silicon deposition. Thereafter, the introduction of SiH₄ was stopped, and only N₂ was introduced. After cooling to 400 °C, the atmosphere was switched to a second mixed gas of CO₂ and N₂ (a volume content of CO₂ was 0.1%), and maintained at 400 °C for 0.1 h in the atmosphere of the second mixed gas to perform oxygen atom deposition. Silicon deposition and oxygen atom deposition were sequentially performed on the porous carbon for 30 cycles. The material was then naturally cooled under N₂ protection. Subsequently, the material was heated to 600 °C in the N₂ atmosphere, the gas was switched to 10% C₂H₂-N₂, and the temperature was maintained for 2 h. After crushing and grading, a silicon-based composite material was obtained. In the obtained silicon-based composite material, a silicon content was 50.2%, an oxygen content was 3.1%, d_{V,50} was 8 µm, and a span (d_{V,90}-d_{V,10})/d_{V,50} was 1.05.

### Test example 1

The specific surface areas of the porous matrix in Embodiments 1-14 and Comparative example 1 were calculated according to a multipoint BET method. The total pore volume was calculated from the adsorption amount at the maximum relative pressure (p/p₀ > 0.99). The pore size distribution of the first pore channels, second pore channels, and third pore channels of the porous matrix was analyzed by fitting N₂ adsorption-desorption isotherms using a Density Functional Theory (DFT) method, and the content information of pore sizes at each level was obtained. The results were presented in the respective embodiments.

### Test example 2

The true densities of the silicon-based composite materials provided in the embodiments and comparative examples were measured by a helium pycnometry method. The results were shown in Table 2.

### Test example 3

The closed pore volumes were calculated based on the true densities of the composite materials obtained by the helium pycnometry method. When the true density of the material was lower than the true density of a fully dense material having the same elemental composition (theoretical density), it indicated the presence of closed pores. The closed pore volume was determined as the reciprocal of the true density of the composite material (closed pore volume + dense volume) minus the reciprocal of the true density of the fully dense material having the same elemental composition (dense volume). The results were shown in Table 2 below.

### Test example 4

Compacted specific surface area: The powder was loaded into a mold with a diameter of 12 mm and subjected to a pressure of 4000 kgf/cm² for 30 s. The specific surface area of the compacted material was measured and recorded as the compacted specific surface area. The smaller the ratio of the compacted specific surface area to the specific surface area, the stronger the compressive resistance of the material.

### Test example 5

Electrode, half battery preparation, and electrochemical performance test:
The silicon-based composite materials provided in the above embodiments and the comparative examples were used as anode active substances to prepare anode plates, respectively. The anode plates were used to prepare a CR2032-type button battery by using a conventional method, and the battery was subjected to an electrical performance test. The results were shown in Table 3. The specific test method included the following operations.
(1) Half battery assembly: the CR2032-type button battery was assembled in a glove box, a lithium metal sheet was used as a counter electrode, a polypropylene microporous membrane was used as a diaphragm, and electrolyte was a solution by dissolving LiPF₆ in a mixture of Ethyl Carbonate (EC) and Diethyl Carbonate (DEC) (volume ratio being EC:DEC=1:1), where a concentration of the LiPF₆ was 1 mol/L.

A charge-discharge test was performed on the battery by using a LAND battery test system.

(2) Cyclic gram capacity and initial coulombic efficiency test: the CR2032-type button battery was stood for 6 h, then was discharged to 0.005 V at 0.05 C, and then discharged to 0.005 V at 0.01 C; after 5 min of standing, the battery was charged to 1.5 V at a constant current of 0.05 C; and a first delithiation gram capacity was a gram capacity (or referred to as mass specific capacity) of an electrode material, and a ratio of a first delithiation capacity to a first lithium intercalation capacity was the initial coulombic efficiency of the battery.

### Test example 6

Full battery preparation and electrochemical performance test:
The silicon-based composite materials provided in the above embodiments and the comparative examples were used as anode active substances, and electrode plates including the anode active substances were used to prepare a soft pack battery by using a conventional method, and electrical performance was performed. The soft pack battery was prepared in a dehumidified room with a dew point of -45 °C. A charge-discharge cycle test was performed on the battery by using a LANBTS battery test system, the results were shown in Table 3, and the specific test method included the following operations.
(1) Preparation of cathode plate: a cathode active substance LiCoO₂, a conductive agent SuperP, a binder PVDF, and a solvent NMP were stirred and mixed well according to a mass ratio of 92:3:5:150, then uniformly coated on a cathode current collector, and then dried at 80 °C, so as to obtain a cathode plate.
(2) Preparation of anode plate: a anode active substance, a conductive agent Super P, a binder polyacrylic acid, and a solvent deionized water were stirred and mixed well according to a mass ratio of 95:1:4:120, then uniformly coated on a anode current collector, and then dried at 100 °C, so as to obtain a anode plate.
(3) The cathode plate and the anode plate were stacked in a square shape and isolated from each other by using a polypropylene isolation film so as to prepare into a battery cell, and packaged in an aluminum-plastic bag; and electrolyte with the corresponding capacity was filled in the aluminum-plastic bag, and was vacuum-sealed to obtain the soft pack battery. The electrolyte was a mixture of EC and DEC of LiPF₆, where the concentration of the LiPF₆ was 1 mol/L, and the volume ratio of EC to DEC was 1:1.
(4) Chemical formation and capacity sorting: after liquid injection and sealing, the battery starts to be chemically formed, stood for 12 h in a 25 °C incubator, then charged to 3.3 V at a constant current of 0.02 C, stood for 30 min, charged to 3.8 V at a constant current of 0.025 C, stood for 10 min, and charged to 4.2 V at a constant current of 0.33 C; the chemically-formed battery was subjected to vacuum pumping and air bag cutting, then subjected to capacity sorting, charged to 4.45 V at a constant current of 0.33 C, stood for 10 min, discharged to 3 V at a constant current of 1 C, stood for 10 min, and discharged to 3 V at the constant current of 0.33 C, until capacity sorting was completed. A ratio of a discharging capacity of the soft pack battery during chemical formation and capacity sorting divided by a charging capacity was the initial coulombic efficiency of the battery.
(5) 25 °C cycle test: the battery was placed in the 25 °C incubator, charged to 4.45 V at a constant current of 1 C, then charged with a constant voltage of 4.45 V to a current of 0.1 C, stood for 10 min, then discharged to 3.0 V at a constant current of 1 C, and stood for 10 min. The above charging and discharging steps were repeated and stopped until a discharging capacity was lower than 80% of the discharging capacity for the first cycle, in this case, the number of cycles obtained was the cycle life of the soft pack battery; and a capacity retention rate of 100 cycles was recorded.
(6) 45 °C cycle test: the battery was placed in a 45 °C incubator, and other steps were the same as the 25 °C cycle test.

The test results of Test examples 2-6 were shown in Table 1 and Table 2 below.

**Table 1**

| Item | True density (g/cm³) | Closed pore volume (cm³/g) | Specific surface area (m²/g) | Compacted specific surface area (m²/g) | Compacted specific surface area/specific surface area |
|---|---|---|---|---|---|
| Embodiment 1 | 1.82 | 0.095 | 3.1 | 12.5 | 4.0 |
| Embodiment 2 | 1.79 | 0.104 | 2.4 | 10.5 | 4.4 |
| Embodiment 3 | 1.81 | 0.098 | 2.9 | 11.9 | 4.1 |
| Embodiment 4 | 1.69 | 0.137 | 1.5 | 8.9 | 5.9 |
| Embodiment 5 | 1.74 | 0.120 | 3.5 | 15.2 | 4.3 |
| Embodiment 6 | 2.8 | 0.012 | 2.6 | 5.8 | 2.2 |
| Embodiment 7 | 2.6 | 0.040 | 2.4 | 6.2 | 2.6 |
| Embodiment 8 | 1.8 | 0.101 | 3.2 | 13.1 | 4.1 |
| Embodiment 9 | 1.81 | 0.098 | 3.0 | 12.9 | 4.3 |
| Embodiment 10 | 1.81 | 0.098 | 2.9 | 11.8 | 4.1 |
| Embodiment 11 | 1.75 | 0.117 | 1.1 | 5.4 | 4.9 |
| Embodiment 12 | 1.73 | 0.123 | 2.2 | 10.5 | 4.8 |
| Embodiment 13 | 1.70 | 0.134 | 1.9 | 35 | 18.4 |
| Comparative example 1 | 1.83 | 0.092 | 3.4 | 116 | 34.1 |

**Table 2**

| Item | Silicon content (%) | Heteroatom (%) | Carbon content (%) | Half battery | | Full battery |
|---|---|---|---|---|---|---|
| | | | | 1.5 V gram capacity (mAh/g) | 1.5 V initial coulombic efficiency (%) | Capacity retention rate (%) of 100 cycles at 25 °C |
| Embodiment 1 | 53.2 | 1.5 | 45.3 | 1986 | 93.8 | 98.5 |
| Embodiment 2 | 51.5 | 5.7 | 42.8 | 1955 | 91.9 | 97.9 |
| Embodiment 3 | 52.1 | 2.1 | 45.8 | 1967 | 93.4 | 98.1 |
| Embodiment 4 | 6.5 | 3.2 | 90.3 | 501 | 92.8 | 99.2 |
| Embodiment 5 | 81.2 | 5.2 | 13.6 | 2421 | 92.2 | 96.5 |
| Embodiment 6 | 48.2 | 23.5 | 28.3 | 1641 | 82.5 | 97.2 |
| Embodiment 7 | 51.3 | 21.2 | 27.5 | 1723 | 85.9 | 97.8 |
| Embodiment 8 | 53.1 | 2.5 | 44.4 | 1940 | 92.6 | 98.5 |
| Embodiment 9 | 51.5 | 3.1 | 45.4 | 1898 | 91.9 | 97.4 |
| Embodiment 10 | 52.1 | 1.9 | 46.0 | 1906 | 93.2 | 97.6 |
| Embodiment 11 | 49.2 | 0.9 | 49.9 | 1845 | 94.2 | 98.7 |
| Embodiment 12 | 49.5 | 8.5 | 42.0 | 1792 | 94.6 | 98.8 |
| Embodiment 13 | 50.2 | 3.1 | 46.7 | 1856 | 92.5 | 92.8 |
| Comparative example 1 | 53.2 | 1.5 | 45.3 | 1986 | 93.8 | 98.5 |

From the data in Table 1 and Table 2, it might be seen that, compared with Comparative example 1, the silicon-carbon composite materials obtained in the above Embodiments 1-13 exhibited higher compressive strength and superior cycling stability in lithium-ion battery applications. Embodiments 1-5 were silicon-based composite materials obtained by silicon infiltration into porous carbon matrixes with different pore distributions. The silicon content was related to the total pore volume of the porous matrix, and consequently, the materials exhibited different specific capacities and initial coulombic efficiencies. Embodiments 6 and 7 used porous oxides as the matrix. The matrix materials exhibited higher true density and compressive strength, such that the composite materials also exhibited higher true density and compressive strength. On the other hand, due to the higher oxygen content of the matrix materials, a carbon coating was required during the preparation process to enhance electrical conductivity, and the higher oxygen content also led to a decrease in the initial coulombic efficiency in battery applications. In order to improve the initial coulombic efficiency of the material, a pre-lithiation treatment of the composite materials was required. Embodiments 8-10 were silicon-based composite materials doped with different elements, which also exhibited good electrochemical performance. Embodiments 11-12 were silicon-based composite materials coated with a carbon layer or an ion conductor layer on the surface. Due to the protection of the coating layer, the expansion of silicon particles was further suppressed, and the capacity retention rate of 100 cycles reached 98.7 % and 98.8 %, respectively. In Embodiment 13, the volume proportion of the first pore channels was relatively low. If pure silicon deposition had been performed without heteroatom confinement, the size of the silicon nanoparticles in the obtained composite material would have exceeded 5 nm or even 10 nm, and the cycling stability in lithium-ion batteries would have been greatly reduced. However, in the present invention, by using multiple cycles of oxygen atom deposition to separate the silicon nanoparticles, the obtained silicon-based composite material still exhibited good cycling stability. It might be seen that the silicon-based composite material provided in the present invention, by configuring the porous matrix provided with the pore channels having the multi-level pore sizes and controlling the ratios of the channels of each pore size, and by depositing the heteroatoms during deposition to separate the silicon nanoparticles, effectively controlled the size and distribution of the silicon particles, thereby limiting silicon expansion to a small range and enabling the obtained silicon-based composite material to exhibit higher cycling stability.

The above are only the preferred embodiments of the present invention and are not intended to limit the present invention. For those skilled in the art, the present invention may have various modifications and variations. Any modifications, equivalent substitutions, improvements, or the like made within the spirit and principle of the present invention shall be included in the scope of protection of the present invention.

## Claims

1. A silicon-based composite material, comprising silicon-based composite material particles, the silicon-based composite material particles comprising a porous matrix, silicon nanoparticles, and heteroatoms, wherein the porous matrix is provided with three-dimensional intersecting pore channels having multi-level pore sizes; each pore channel contains at least one silicon nanoparticle; and the heteroatoms at least partially cover the surface of the silicon nanoparticles, and/or the heteroatoms are spaced between the silicon nanoparticles.

2. The silicon-based composite material according to claim 1, further comprising closed pores, wherein a closed pore volume of the silicon-based composite material is 0.01-0.25 cm³/g; and/or a true density of the silicon-based composite material is 1.3-3.0 g/cm³.

3. The silicon-based composite material according to claim 1, wherein a specific surface area of the silicon-based composite material is 0.5-50 m²/g, preferably 0.5-10 m²/g, and more preferably 0.5-2 m²/g; and/or a compacted specific surface area of the silicon-based composite material is 1-20 times, preferably 1-10 times, and more preferably 1-5 times the specific surface area of the silicon-based composite material.

4. The silicon-based composite material according to claim 1, wherein the silicon nanoparticles comprise first silicon nanoparticles, second silicon nanoparticles, and third silicon nanoparticles, wherein a size of the first silicon nanoparticles is D1, where 0.35 nm≤D1≤2 nm; a size of the second silicon nanoparticles is D2, where 2 nm<D2≤5 nm; and a size of the third silicon nanoparticles is D3, where 5 nm<D3≤10 nm; and
preferably, based on the mass of the silicon nanoparticles, a mass content of the first silicon nanoparticles is 60-100%, a mass content of the second silicon nanoparticles is 0-40%, and a mass content of the third silicon nanoparticles is 0-5%.

5. The silicon-based composite material according to claim 1, wherein the pore channels of the porous matrix comprise first pore channels, second pore channels, and third pore channels, wherein a pore size of the first pore channels is d1, where 0.35 nm≤d1≤2 nm; a pore size of the second pore channels is d2, where 2 nm<d2≤10 nm; and a pore size of the third pore channels is d3, where 10 nm<d3≤50 nm; and
preferably, a volume proportion of the first pore channels in the pore channels of the porous matrix is 30-95%, a volume proportion of the second pore channels in the pore channels of the porous matrix is 1-60%, and a volume proportion of the third pore channels in the pore channels of the porous matrix is 0-15%.

6. The silicon-based composite material according to claim 1, wherein the porous matrix comprises at least one of porous carbon, a molecular sieve, a porous metal, a porous metal oxide, a porous Metal-Organic Framework, and a porous organic-inorganic hybrid material framework; and preferably, a specific surface area of the porous matrix is 200-3000 m²/g, and a pore volume is 0.2-3.0 cm³/g.

7. The silicon-based composite material according to claim 1, wherein, in the silicon-based composite material, a mass content of silicon is 5-90%, and a mass content of the heteroatoms is 0.1-10%; and/or
the heteroatoms cover the surface of the silicon nanoparticles and/or are spaced between multiple silicon nanoparticles to form heteroatom layers, wherein a total thickness of the heteroatom layers is 0.5-50 nm, preferably 0.5-10 nm, and more preferably 0.5-2 nm; and/or
the heteroatoms comprise at least one of B, C, N, P, O, and S.

8. The silicon-based composite material according to claim 1, wherein a median particle size d_{V,50} of the silicon-based composite material is 5-20 µm, and a span (d_{V,90}-d_{V,10})/d_{V,50} is 0.8-2.0; and preferably, the median particle size d_{V,50} of the silicon-based composite material is 6-12 µm, and the span (d_{V,90}-d_{V,10})/d_{V,50} is 0.8-1.2.

9. The silicon-based composite material according to any one of claims 1 to 8, further comprising a coating layer; preferably, a material of the coating layer is selected from one or more of a solid electrolyte, a conductive polymer, a carbonaceous material, a metal, an alloy, a metal oxide, a metal hydroxide, a metal halide, a metal sulfide, a metal phosphate, a borate-containing compound, a sulfate-containing compound, a nitrate-containing compound, and a polyoxometalate; and more preferably, the coating layer comprises a carbonaceous material.

10. A method for preparing a silicon-based composite material, wherein the preparation method comprises: S1, providing a porous matrix, the porous matrix being provided with three-dimensional intersecting pore channels having multi-level pore sizes; and S2, contacting a silicon-containing precursor and a heteroatom-containing precursor with the porous matrix to obtain the silicon-based composite material;
wherein the porous matrix, the pore channels, the silicon nanoparticles, and the heteroatoms respectively have the same meanings as those in claims 1 to 9.

11. The preparation method according to claim 10, wherein, in S2, the silicon-containing precursor comprises at least one of monosilane, disilane, trisilane, halosilane, polysilane, thiazole and a derivative thereof, and silafluorene and a derivative thereof; and/or
the heteroatom-containing precursor comprises at least one of an oxygen-containing precursor, a carbon-containing precursor, a nitrogen-containing precursor, a phosphorus-containing precursor, a sulfur-containing precursor, and a boron-containing precursor; and/or
the silicon-containing precursor and the heteroatom-containing precursor are in contact with the porous matrix at a temperature of 150-1000 °C for 0.1-100 h; preferably, the silicon-containing precursor and the heteroatom-containing precursor are in contact with the porous matrix at a temperature of 200-700 °C; and/or
the manner in which the silicon-containing precursor and the heteroatom-containing precursor are in contact with the porous matrix comprises: alternately contacting the silicon-containing precursor and the heteroatom-containing precursor with the porous matrix; or simultaneously contacting the silicon-containing precursor and the heteroatom-containing precursor with the porous matrix; or alternately contacting the silicon-containing precursor and a mixed gas containing the silicon-containing precursor and the heteroatom-containing precursor with the porous matrix; and preferably, the silicon-containing precursor is continuously in contact with the porous matrix, and the heteroatom-containing precursor is intermittently introduced during this process.

12. The preparation method according to claim 10, further comprising S3 performed after S2: performing a coating treatment on the composite material obtained in S2 to obtain a silicon-based composite material having a coating layer on the surface, wherein the coating layer has the same meaning as that in claim 9.

13. A anode, comprising a anode active substance, wherein the anode active substance comprises the silicon-based composite material according to any one of claims 1 to 9 or the silicon-based composite material obtained by the preparation method according to any one of claims 10 to 12.

14. A battery, comprising a cathode, a anode, a separator, and an electrolyte, wherein the anode comprises a anode active substance, the anode active substance comprising the silicon-based anode material containing sub-nanometer micropores according to any one of claims 1-9, and/or the silicon-based anode material containing sub-nanometer micropores prepared by the preparation method according to any one of claims 10-12.
